# EUROPÄISCHE PATENTANMELDUNG

(11) **EP 0 586 754 A1**
(43) Veröffentlichungstag der Anmeldung: **16.03.1994**
(21) Anmeldenummer: 92250254.7
(22) Anmeldetag: 10.09.1992
(51) Int. Cl.: B62K 19/36

(54) **Rahmen für einspurige Fahrzeuge, insbesondere Fahrräder**

(71) Anmelder: Ziegler, Jörg, D-12209 Berlin (DE)
(72) Erfinder: Ziegler, Jörg, D-12209 Berlin (DE)
(74) Vertreter: Schneider, Henry

(57) **Zusammenfassung**

Die Erfindung betrifft einen Rahmen für einspurige Fahrzeuge, insbesondere für Fahrräder, mit Rahmenteilen zur Aufnahme der Vorderradgabel, des Hinterrades und einem Lagerpunkt zur Aufnahme der Tretkurbel sowie Befestigungsvorrichtungen für den Fahrradsattel.

Es ist Aufgabe der Erfindung, einen Rahmen zu schaffen, mit dem während der Fahrt eine problemlose Verstellung des Fahrradsattels in bzw. entgegengesetzt der Fahrtrichtung und/oder der Höhe möglich ist.

Dazu ist vorgesehen, daß das Sitzrohr (22) im Lagerpunkt (20) in Fahrtrichtung schwenkbar gelagert ist.

## Beschreibung

Die Erfindung betrifft einen Rahmen für einspurige Fahrzeuge, insbesondere für Fahrräder nach dem Oberbegriff des Hauptanspruches.

Es ist bekannt, daß Fahrräder im allgemeinen einen Rahmen besitzen, der einerseits Aufnahmemittel zur Lagerung des Vorder- und des Hinterrades besitzt und über eine geeignete Vorrichtung zur Befestigung des Fahrradsitzes und zur Anordnung einer die Gegenkraft für die Ableitung der Tretkraft auf die Räder aufbringende Lagerung der Tretkurbel sowie über einen in einem Lenkerrohr geführten Lenker verfügt.

Um die Tretarbeit optimal in die Bewegung des Fahrrades umsetzen zu können, ist die relative Position des Fahrers zur Tretkurbel entscheidend.

So ist allgemein bekannt, die Sitzposition des Fahrers durch eine Höhenverstellung des Fahrradsattels zu verändern.

In der DE-OS 35 36 012 ist beispielsweise vorgeschlagen, diese Höhenverstellung halbautomatisch mittels einer in der Sattelstange angeordneten Gasdruckfeder durchzuführen, die über einen von der Lenkstange aus zu bediendenden Bowdenzug ent- bzw. verriegelt werden kann.

Diese Lösung hat den Nachteil, daß sie zwar eine Höhenverstellung des Fahrradsitzes ermöglicht, jedoch keine Verstellung des Fahrradsitzes in bzw. entgegengesetzt der Fortbewegungsrichtung.

Diese Verstellung des Fahrradsitzes ist jedoch gerade, insbesondere im sportlichen Bereich, beispielsweise beim Mountainbike- oder Treckingbikefahren, wünschenswert, da über eine horizontale Verstellung der Schwerpunkt des Fahrers in bezug auf das Fahrrad bedeutender verändert werden kann.

So sollte zur Bergauffahrt der Schwerpunkt des Fahrers möglichst weit vorne liegen, um die Tretarbeit optimal in Bewegung umwandeln zu können. Die Fahrer behelfen sich in aller Regel damit, daß sie bei der Bergauffahrt aufstehen. Dabei ist jedoch ein Teil der Muskulatur mit Stützarbeit belastet, die dann nicht zur Tretarbeit zur Verfügung steht.

Bei Bergabfahrten ist zur Einnahme einer aerodynamisch günstigen Position ein möglichst weit nach hinten verlagerter Schwerpunkt wünschenswert, der gleichzeitig die Lenk- und Fahrsicherheit positiv beeinflußt.

Aus der US-PS 5,007,675 ist beispielsweise eine Anordnung bekannt, die über ein Teleskoprohrsystem die waagerechte Verstellung des Fahrradsattels ermöglicht. Über ein Bedienelement wird eine Arretierung gelöst, und der Fahrer kann dann mit seinem Körpergewicht den Fahrradsattel verschieben. Aufgrund des Systems ineinandergeschobener Teleskoprohre führen schon geringste Ungenauigkeiten, und die sind bei einem wahrend der Fahrt mit dem Fahrer belasteten Sitz immer gegeben, zu Störungen und Verkantungen.

Der Erfindung liegt daher die Aufgabe zugrunde, einen Rahmen der gattungsgemäßen Art zu schaffen, mit dem während der Fahrt eine problemlose Verstellung des Fahrradsattels in bzw. entgegengesetzt der Fahrtrichtung und/oder in der Höhe möglich ist.

Erfindungsgemäß wird die Aufgabe durch die kennzeichnenden Merkmale des Hauptanspruches gelöst.

Es wurde gefunden, daß es in einfacher Weise möglich ist, den Fahrradsattel eines Fahrrades in bzw. entgegengesetzt der Fahrtrichtung zu verstellen, wenn das Sitzrohr mit dem daran befestigten Fahrradsattel in einem Lagerpunkt in bzw. entgegengesetzt der Fahrtrichtung verschwenkt wird, einerseits der Fahrradsattel eine Kurve beschreibt, so daß der Schwerpunkt eines auf dem Fahrradsattel sitzenden Fahrers in bezug auf die die Tretarbeit aufnehmende Tretkurbel verlagert werden kann und daS gleichzeitig eine Abstandsänderung zwischen Fahrradsitz und Tretkurbellagerung möglich ist, und sich damit eine Höhenverschiebung der Sitzposition des Fahrers ergibt.

Selbstverständlich kann die Anordnung so vorgesehen sein, daß das Verhältnis der horizontalen zur vertikalen Veränderung der Sitzposition bestimmte Bedingungen erfüllt.

Darüber hinaus ist denkbar, daß der Fahrradsattel noch eine separate Höhenverstellung besitzt.

In ganz besonders vorteilhafter Ausgestaltung ist vorgesehen, daß der Fahrradrahmen ein oberes Rahmenrohr besitzt, das eine bestimmte Kurvenbahn im Verhältnis zur Tretkurbellagerung beschreibt und auf diesem oberen Rahmenrohr eine Verstellung des Fahrradsattels erfolgt.

Im Sinne der Erfindung ist weiterhin, wenn die Schwerpunktverlagerung des Fahrers über eine Höhenverstellung des Lenkers erfolgt, wobei die Höhenverstellung auch während der Fahrt mit entsprechend angeordneten Gasdruckfedern realisiert wird. Die Höhenverstellung der Lenkerposition gegenüber dem Grund wird einerseits über eine Gasdruckfeder oberhalb des Lenkerrohres bzw. zwei Gasdruckfedern an der Vordergabel unterhalb des Lenkerrohres erreicht.

Darüber hinaus ist erfindungsgemäß, wenn der gesamte, den Lenker tragenden, Lenkervorbau um seinen mit der Vordergabel fluchtenden Punkt schwenkbar gelagert ist.

Weitere vorteilhafte Ausgestaltungen der Erfindung ergeben sich aus den Unteransprüchen.

Die Erfindung soll nachfolgend anhand der zugehörigen Zeichnungen in Ausführungsbeispielen naher erläutert werden.

Es zeigen:
- Figur 1: schematisch einen erfindungsgemäßen Fahrradrahmen;
- Figur 2: eine Draufsicht auf den Rahmen gemäß Figur 1;
- Figur 3: einen weiteren erfindungsgemäßen Fahrradrahmen;
- Figur 4: eine weitere Variante eines erfindungsgemäßen Fahrradrahmens;
- Figur 5: eine weitere Variante eines erfindungsgemäßen Fahrradrahmens;
- Figur 6: eine Draufsicht auf den Rahmen gemäß Figur 5;
- Figur 7: eine weitere Variante eines erfindungsgemäßen Fahrradrahmens;
- Figur 8: eine weitere Variante eines erfindungsgemäßen Fahrradrahmens;
- Figur 9: eine weitere Variante eines erfindungsgemäßen Fahrradrahmens;
- Figur 10: eine weitere Variante eines erfindungsgemäßen Fahrradrahmens;
- Figur 11: eine weitere Variante eines erfindungsgemäßen Fahrradrahmens;
- Figur 12: eine Draufsicht auf den Rahmen gemäß Figur 11;
- Figur 13: ein höhenverstellbarer Lenker;
- Figur 14: eine weitere Variante eines höhenverstellbaren Lenkers und
- Figur 15: ein verschwenkbarer Lenker.

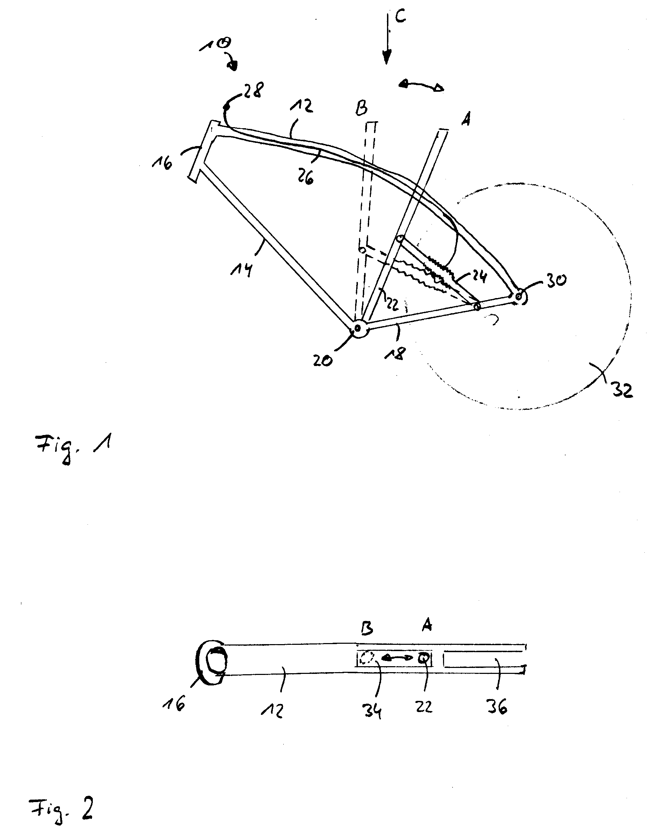

In Figur 1 ist ein allgemein mit 10 bezeichneter Fahrradrahmen gezeigt.

Der Rahmen 10 besteht aus einem Oberrohr 12, einem Unterrohr 14, einem Lenkerrohr 16 und Kettenstreben 18. Das Unterrohr 14 und die Kettenstreben 18 sind miteinander verbunden und bilden den Lagerpunkt 20 zur Aufnahme einer Tretkurbel. Im Lagerpunkt 20 ist ein Sitzrohr 22 schwenkbar angelenkt.

Zwischen Sitzrohr 22 und Kettenstrebe 18 ist eine Gasfeder 24 angeordnet. Die Gasfeder 24 ist über eine Wirkungsleitung 26 mit einem Bedienelement 28 verbunden. Das Bedienelement 28 ist an der Lenkerstange, die hier nicht dargestellt ist, befestigt. Die Verbindung zwischen Oberrohr 12 und Kettenstreben 18 bildet den Aufnahmepunkt 30 für ein Hinterrad 32. Auf die Darstellung des Fahrradsattels wurde verzichtet.

In Figur 2 ist eine Draufsicht aus Richtung C auf den Rahmen 10 gemäß Figur 1 gezeigt.

Hierbei wird deutlich, daß das Oberrohr 12 eine Aussparung 34 besitzt, durch die das Sitzrohr 22 geführt ist. Zur Aufnahme des Hinterrades 32 ist eine weitere Aussparung 36 vorgesehen.

Die Anordnung übt folgende Funktion aus:
Ein Fahrer, der sich mit einem, den Rahmen 10 besitzenden, Fahrrad fortbewegt, hat die Sitzposition A eingenommen. Soll während der Fahrt, die Anordnung funktioniert selbstverständlich auch im Stand, die Sitzposition verändert werden, betätigt der Fahrer das Bedienelement 28, und über die Wirkungsverbindung 26 wird die Gasfeder 24 ausgelöst. Indem der Fahrer sein Körpergewicht leicht nach oben verlagert, bewegt die Gasfeder 24 das Sitzrohr 22 in Richtung Sitzposition B. Das Sitzrohr 22 schwenkt dabei um den Lagerpunkt 20. Die maximale Stellung des Sitzrohres 22 wird durch die Länge der Aussparung 34 im Oberrohr 12 bestimmt.

Soll wieder die Sitzposition A eingenommen werden, löst der Fahrer wiederum über das Bedienelement 28 die Gasfeder 24 aus, und durch das Körpergewicht des Fahrers und Abdrücken am Lenker wird das Sitzrohr 22 um den Lagerpunkt 20 in Richtung Sitzposition A verschwenkt.

Die Sitzpositionen A und B stellen lediglich die Maximalpositionen dar.

Durch Loslassen des Bedienelementes 28 in einer Zwischenposition und gleichzeitiges Belasten des Sitzrohres 22 über das Körpergewicht des Fahrers verbleibt dieses in dieser Position.

Die Dimensionierungen der Aussparung 34 und des Sitzrohres 22 sind so bemessen, daß sich eine von seitlichem Spiel freie Beweglichkeit ergibt.

Zur besseren Arretierung des Sitzrohres 22 in beliebiger Position innerhalb der Aussparung 34 können im Oberrohr 12 Feststellmittel vorgesehen sein, die möglicherweise über die Betätigung des Bedienelementes 28 gleichzeitig das Sitzrohr 22 freigeben bzw. dieses arretieren. Bei entsprechender Bemessung der Gasfeder 24 ergibt sich gleichzeitig ein gewisser Federungskomfort für den Fahrer.

Durch Verstellung des Sitzrohres 22 in Richtung der Sitzposition B wird der Schwerpunkt des Fahrers in Fahrtrichtung gesehen nach vorne verlagert. Dadurch ist insbesondere bei Bergauffahrten eine bessere Kraftübertragung auf die Tretkurbel möglich.

Die Verstellung des Sitzrohres 22 kann selbstverständlich mit einer separaten an sich bekannten Höhenverstellung des Fahrradsattels kombiniert sein, so daß in Kombination der beiden Verstellungen jederzeit eine optimale Anpassung der Sitzposition des Fahrers erfolgen kann.

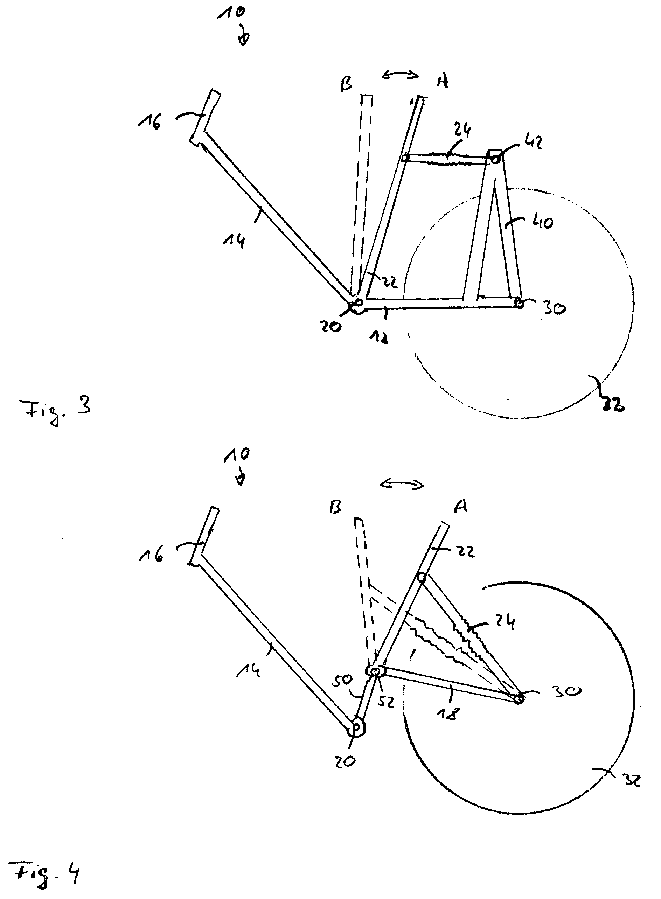

Der in Figur 3 gezeigte Rahmen 10 stellt eine Modifikation der erfindungsgemäßen Idee dar.

Der Rahmen 10 besitzt ein Lenkerrohr 16, ein Unterrohr 14 und Kettenstreben 18. Die Kettenstreben 18 und das Unterrohr 14 bilden einen Lagerpunkt 20 für die Tretkurbel und gleichzeitig den Schwenkpunkt für das Sitzrohr 22. Die Kettenstreben 18 weisen einen Rahmenaufbau 40 auf, der in einem oberen Lagerpunkt 42 über die Gasfeder 24 mit dem Sitzrohr 22 verbunden ist.

Die Funktionsweise hinsichtlich der Verstellbarkeit des Sitzrohres 22 in bzw. entgegengesetzt der Fahrtrichtung ist die gleiche wie bei den vorhergehend beschriebenen Figuren.

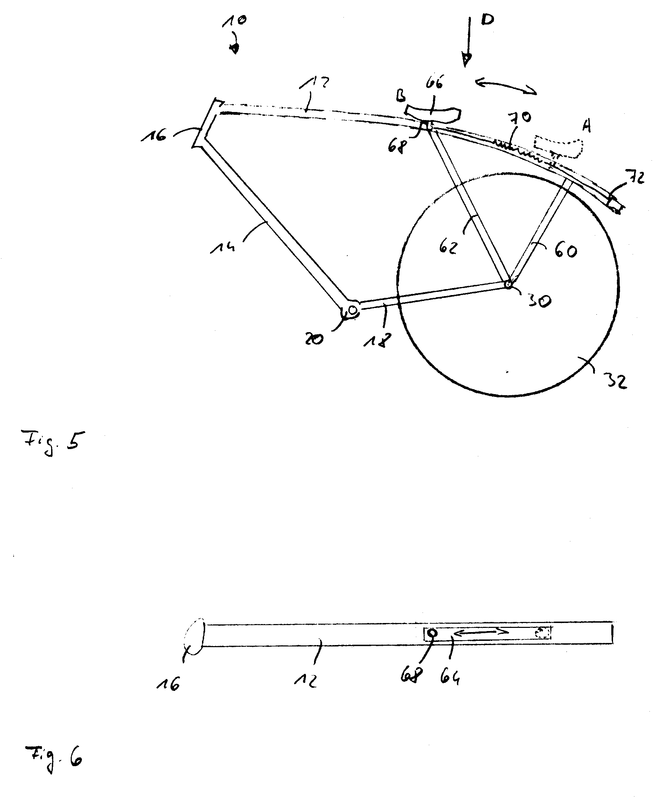

Gemäß Figur 4 besteht der Rahmen 10 aus einem Lenkerrohr 16 und einem Unterrohr 14, an dessen einem Ende der Lagerpunkt 20 für die Tretkurbel angeordnet ist. Der Lagerpunkt 20 wird gleichzeitig über ein Zwischenrohr 50 gehalten, das in einem Lagerpunkt 52 endet, an dem einerseits die Kettenstreben 18 und schwenkbar das Sitzrohr 22 gelagert sind. Das Sitzrohr 22 ist weiterhin über die Gasfeder 24 mit dem Lagerpunkt 30 zur Aufnahme des Hinterrades 32 verbunden.

Durch Verstellung des Sitzrohres 22 über die Gasfeder 24 in bereits beschriebener Weise kann wiederum eine Schwerpunktverlagerung des Fahrers erfolgen. Diese Lösung bietet den Vorteil, daß aufgrund des Einsatzes eines verkürzten Sitzrohres 22 zum Erreichen der selben Sitzposition ein geringerer Weg des Sitzrohres zurückgelegt werden muß.

Figur 5 zeigt ein ganz bevorzugtes Ausführungsbeispiel.

Der Rahmen 10 besteht aus einem Lenkerrohr 16, einem Oberrohr 12, einem Unterrohr 14 sowie Kettenstreben 18. Die Kettenstreben 18 sind im Lagerpunkt 30 zur Aufnahme des Hinterrades 32 über Verbindungsstreben 60 und 62 mit dem Oberrohr 12 verbunden.

Das Oberrohr 12 besitzt, wie Figur 6 besser zeigt, eine Ausnehmung 64. In der Ausnehmung 64 ist ein Fahrradsattel 66 auf einem Schlitten 68 geführt. Der Schlitten 68 ist über eine Gasfeder 70 mit einem Lagerpunkt 72 verbunden. Die Gasfeder 70 ist dabei innerhalb des Oberrohres 12 geführt. Das Oberrohr 12 besitzt eine von einer Geraden abweichende Form und beschreibt eine Kurvenbahn um den Lagerpunkt 20 des Tretlagers.

Die Verstellung des Fahrradsattels 66 in bzw. entgegengesetzt der Fahrtrichtung erfolgt analog der bereits beschriebenen Beispiele. Der Fahrradsattel 66 kann dabei innerhalb der Ausnehmung 64 in jeder beliebigen Stellung zwischen den Sitzpositionen A und B gebracht werden.

Durch die von der Geraden abweichende Kurvenbahn des Oberrohres 12 wird gleichzeitig mit der Verstellung des Fahrradsattels 66 in bzw. entgegengesetzt der Fahrtrichtung der Abstand zwischen Fahrradsattel 66 und Lagerpunkt 20 für die Tretkurbel verändert, ohne daS eine separate Höhenverstellung des Fahrradsattels notwendig ist.

Durch Vorherbestimmung der Kurvenbahn des Oberrohres 12 kann die Sitzposition des Fahrers in beliebigen Fahrsituationen seinen physiologischen Bedingungen optimal angepaßt werden.

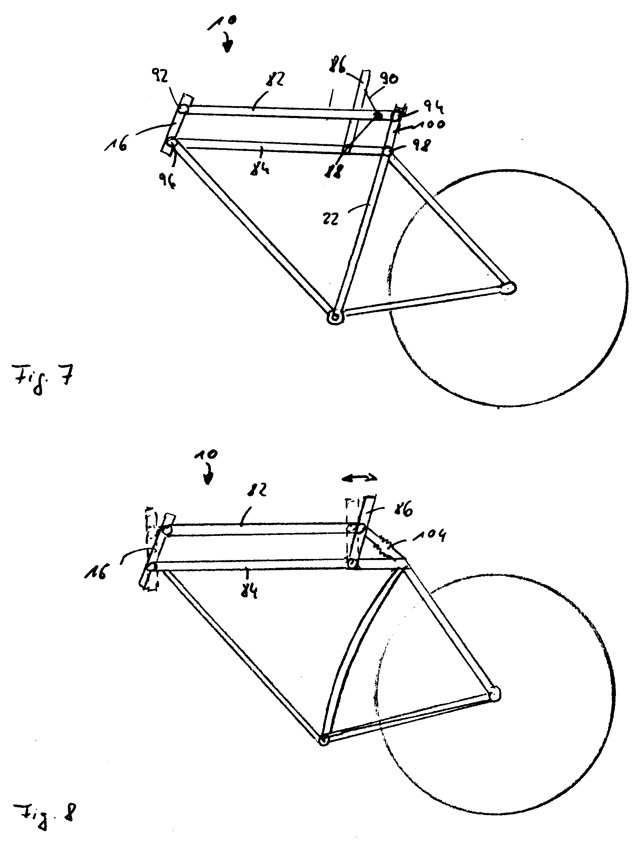

Figur 7 zeigt einen Rahmen, der zwischen Lenkerrohr 16 und Sitzrohr 22 ein zweigeteiltes Oberrohr 80 besitzt.

Das Oberrohr 80 besteht aus einem Rohr 82 und einem Rohr 84, die parallel beabstandet zueinander angeordnet sind. Mit dem Rohr 84 ist eine Sattelstütze 86 im Punkt 88 schwenkbar verbunden. Die Sattelstütze 86 ist weiterhin über ein Gelenk 90 beweglich am Rohr 82 angelenkt.

Die Rohre 82 und 84 sind in ihren Verbindungspunkten 92 und 94 bzw. 96 und 98 mit dem Lenkerrohr 16 und dem Sitzrohr 22 bewglich gelagert. Das Sitzrohr 22 ist in seinem oberen Teil 100 um den Punkt 98 verschwenkbar.

Das Rohr 82, das Rohr 84, das Lenkerrohr 16 mit der darin befindlichen Gabel 102 und das Teil 100 bilden somit ein bewegliches Parallelogramm. Durch Verschieben des Rohres 84 in Fahrtrichtung wird die Sattelstütze automatisch um den Punkt 88 in Fahrtrichtung verschwenkt und verändert damit die Sitzposition des Fahrers sowohl in horizontaler als auch in vertikaler Richtung.

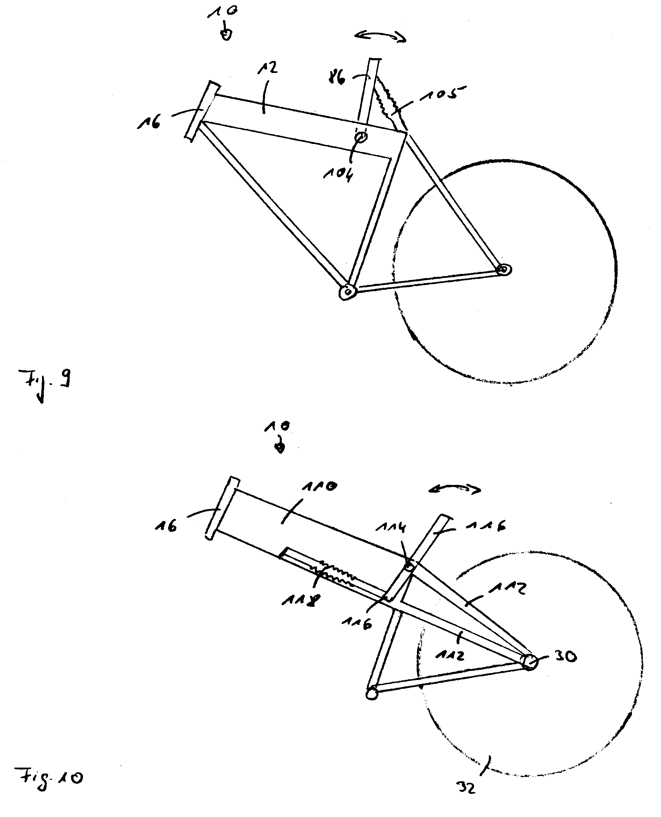

In Figur 8 ist der Gedanke des beweglichen Parallelogramms weiterentwickelt.

Das Parallelogramm wird hier durch das Lenkerrohr 16, das Rohr 82, das Rohr 84 und die Sattelstütze 86 gebildet. Die Verschiebung des Rohres 82 und damit des Parallelogramms wird durch eine Gasdruckfeder 104 bewirkt, die zwischen dem Punkt 94 und dem Rohr 84 angeordnet ist.

Die Wirkungsweise und die Bedienung der Gasfeder ist bereits weiter oben beschrieben worden.

Figur 9 zeigt die Möglichkeit, die Sattelstütze 86 schwenkbar in einem Punkt 104 an dem als Flachteil ausgeführten Oberrohr 12 zu befestigen und zwischen Sattelstütze 86 und Oberrohr 12 eine Gasdruckfeder 105 vorzusehen. Die Gasdruckfeder übernimmt auf bereits beschriebene Weise die Verschwenkung der Sattelstütze 86.

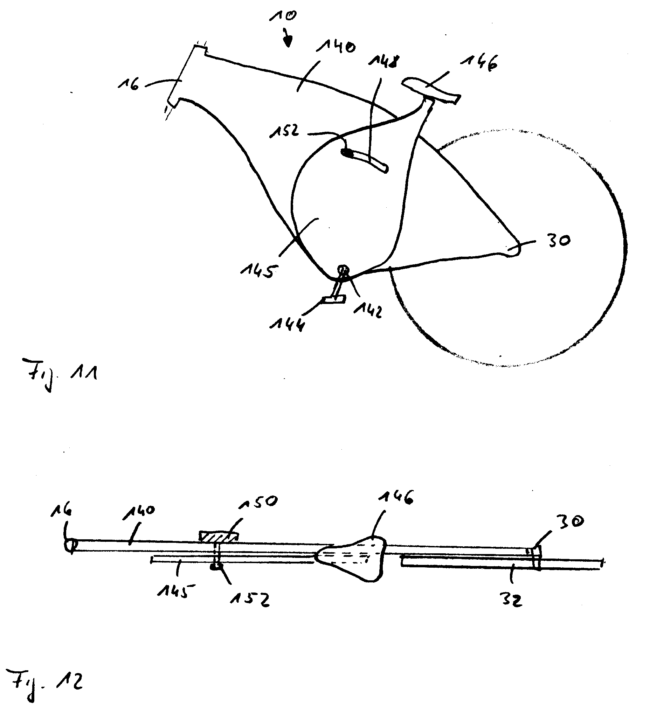

Ein weiteres Beispiel zeigt Figur 10.

Der Rahmen 10 besteht aus einem hohlförmigen Flachteil 110, das ein Lenkerrohr 16 und zum Aufnahmepunkt 30 für das Hinterrad 32 auslaufende Streben 112 aufweist. Im Punkt 114 ist eine Sattelstütze 116 schwenkbar gelagert. Am unteren Ende der Sattelstütze 116 greift eine Gasdruckfeder 118 an, die ihrerseits innerhalb des Flachteiles 110 befestigt ist. Durch Betätigen der Gasdruckfeder 118 kann die Sattelstütze 116 um den Punkt 114 verschwenkt werden.

In den Figuren 11 und 12 ist eine vorteilhafte Ausgestaltung der Erfindung gezeigt.

Der Rahmen 10 wird hier durch eine das Lenkerrohr 16 und die Hinterradaufnahme 30 aufweisende flache Scheibe 140 gebildet.

Die Scheibe empfindet mit ihrem äußeren Verlauf die Gestalt eines Oberrohres und Unterrohres nach. Die Scheibe 140 besitzt weiterhin einen Aufnahmepunkt 142 zur Lagerung einer Tretkurbel 144. Um diesen Aufnahmepunkt 142 ist gleichzeitig eine zweite parallel zur ersten Scheibe 140 verlaufende Scheibe 145 schwenkbar gelagert. Diese Scheibe 145 übernimmt die Funktion des Sattelrohres und trägt einen Sattel 146. Die Scheiben 140 und 144 weisen korrespondierende Schlitze 148 auf, in denen ein einseitig einen Schnellverschluß 150 besitzender Bolzen 152 eingreift.

Indem der Schnellverschluß 150 gelöst wird ist eine relative durch die Lage der Schlitze 148 begrenzte Verschiebung der Scheiben 140 und 145 möglich.

Bei gelöster Spannvorrichtung wurde durch eine Feder, beispielsweise eine Gasfeder, vom Sattel 144 die Position B eingenommen.

Die Position A oder eine beliebige Position dazwischen kann eingenommen werden, indem durch ein Abdrücken vom Lenker und durch den Einsatz des Körpergewichtes die Feder, die nicht mit dargestellt ist, ausgelenkt wird. Es ist auch denkbar, daß der Sattel allein durch die geeignete Positionierung des Lagerpunktes 142 die Stellung B einnimmt. In diesem Fall wäre keine Rückholfeder nötig.

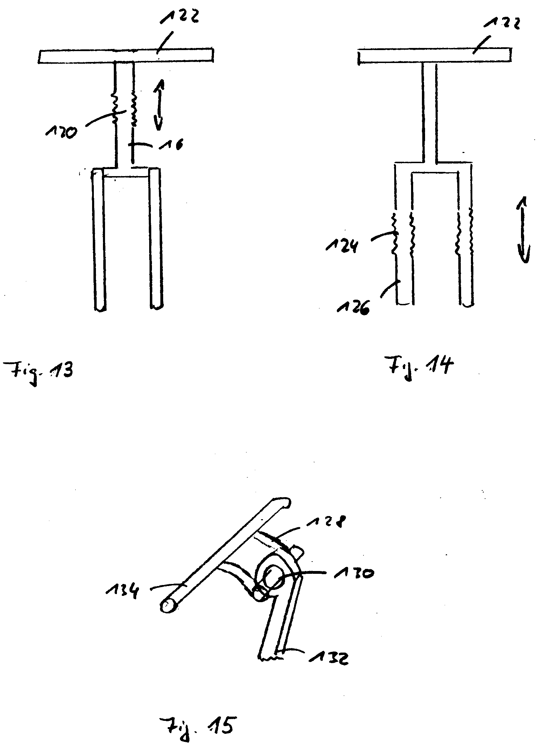

In den Figuren 13 bis 15 sind Varianten einer unterstützenden Schwerpunktverlagerung des Fahrers aufgeführt.

So ist in Figur 13 eine Gasdruckfeder 120 innerhalb des Lenkerrohres 16 angeordnet, mit deren Hilfe eine Höhenverstellung des Lenkers 122 während der Fahrt möglich ist.

Die Höhenverstellung kann auch, wie Figur 14 zeigt, über Gasdruckfedern 124 erfolgen, die in den Gabeln 126 der Vorderradgabel vorgesehen sind.

Entsprechend Figur 15 ist der Lenkervorbau 128 mit Hilfe eines Gelenkes 130 am Lenkerrohr 132 schwenkbar befestigt.

Durch Verschwenken des Lenkers 134 im Gelenk 130 ergibt sich eine Höhenverstellung des Lenkers 134 und damit eine Schwerpunktverlagerung des Fahrers. Das Gelenk 130 ist stufenlos einrastbar und somit in jeder beliebigen Position arretierbar.

Die Erfindung beschränkt sich nicht auf die beschriebenen Ausführungsbeispiele, sondern bezieht sich generell auf die Verstellmöglichkeiten des Sitzrohres und damit des Fahrradsattels in bzw. entgegengesetzt der Fahrtrichtung mittels geeigneter Vorrichtungen, insbesondere mittels Gasfedern und einer Schwerpunktverlagerung des Fahrers in bezug zu der jeweiligen Fahrsituation.

## Patentansprüche

1. Rahmen für einspurige Fahrzeuge, insbesondere für Fahrräder, mit Rahmenteilen zur Aufnahme der Vorderradgabel, des Hinterrades und einem Lagerpunkt zur Aufnahme der Tretkurbel sowie Befestigungsvorrichtungen für den Fahrradsattel, **dadurch gekennzeichnet**, daß das Sitzrohr (22) im Lagerpunkt (20) in Fahrtrichtung schwenkbar gelagert ist.

2. Rahmen nach Anspruch 1, **dadurch gekennzeichnet**, daß zwischen wenigstens einer Kettenstrebe (18) und Sitzrohr (22) eine Verbindung angeordnet ist, die eine Gasfeder (24) enthält.

3. Rahmen nach den vorhergehenden Ansprüchen, **dadurch gekennzeichnet**, daß die Gasfeder (24) über eine Wirkungsverbindung (26) mit einem an dem Lenker angeordneten Bedienelement (28) verbunden ist.

4. Rahmen nach den vorhergehenden Ansprüchen, **dadurch gekennzeichnet**, daß das Oberrohr (12) eine Aussparung (34) besitzt, durch die das Sitzrohr (22) geführt ist.

5. Rahmen nach den vorhergehenden Ansprüchen, **dadurch gekennzeichnet**, daß im Oberrohr (12) im Bereich der Aussparung (34) die lichte Breite der Aussparung (34) verringernde und/oder das Sitzrohr (22) greifende Arretierungsmittel vorgesehen sind.

6. Rahmen nach Anspruch 5, **dadurch gekennzeichnet**, daß die Arretierungsmittel konische Flanken aufweisende Keile sind.

7. Rahmen nach Anspruch 1, **dadurch gekennzeichnet**, daß die Kettenstreben (18) einen Rahmenaufbau (40) besitzen, an dessen oberen Lagerpunkt (42) eine mit dem Sitzrohr (22), eine Gasfeder (24) aufweisende, Verbindung angelenkt ist.

8. Rahmen nach Anspruch 1, **dadurch gekennzeichnet**, daß der Lagerpunkt (20) von einer Verbindungsstelle des Unterrohres (14) und eines Zwischenrohres (50) gebildet wird, das Zwischenrohr (50) an seinem oberen Ende einen Lagerpunkt (52) besitzt, mit dem die Kettenstreben verbunden sind, und in dem das Sitzrohr (22) schwenkbar gelagert ist.

9. Rahmen nach Anspruch 8, **dadurch gekennzeichnet**, daß das Sitzrohr (22) über eine eine Gasfeder (24) enthaltende Verbindung mit dem Lagerpunkt (30) der Kettenstreben (18) zur Aufnahme des Hinterrades (32) verbunden ist.

10. Rahmen nach Anspruch 1, **dadurch gekennzeichnet**, daß das Oberrohr (12) eine von einer Geraden abweichende Form aufweist.

11. Rahmen nach Anspruch 10, **dadurch gekennzeichnet**, daß das Oberrohr (12) eine Kurvenbahn um den Lagerpunkt (20) zur Aufnahme der Tretkurbel beschreibt.

12. Rahmen nach den vorhergehenden Ansprüchen, **dadurch gekennzeichnet**, daß das Oberrohr (12) eine Ausnehmung (64) besitzt, in der ein einen Fahrradsattel (66) aufweisender Schlitten (68) geführt ist.

13. Rahmen nach den vorhergehenden Ansprüchen, **dadurch gekennzeichnet**, daß der Schlitten (68) über eine Gasfeder (70) mit einem Lagerpunkt (72) verbunden ist.

14. Rahmen nach den vorhergehenden Ansprüchen, **dadurch gekennzeichnet**, daß die Gasfeder (70) über eine Wirkungsverbindung mit einem am Lenker befestigten Bedienelement verbunden ist.

15. Rahmen nach den vorhergehenden Ansprüchen, **dadurch gekennzeichnet**, daß der Fahrradsattel (66) stufenlos zwischen den Sitzpositionen (A und B) einstellbar ist.

16. Rahmen nach den vorhergehenden Ansprüchen, **dadurch gekennzeichnet**, daß das Oberrohr (12) im Bereich der Ausnehmung (64) den Schlitten (68) arretierende Vorrichtungen besitzt.

17. Rahmen nach den vorhergehenden Ansprüchen, **dadurch gekennzeichnet**, daß das Sitzrohr (22) bzw. der Schlitten (68) eine zusätzliche Höhenverstellung für den Fahrradsattel (66) aufweisen.

18. Rahmen nach Anspruch 1, **dadurch gekennzeichnet**, daß das Oberrohr (80) des Rahmens (10) aus parallel zueinander beabstandeten Rohren (82; 84) besteht, im Punkt (88) eine Sattelstütze (86) am Rohr (84) schwenkbar gelagert ist und über eine gelenkartige Verbindung (90) mit dem Rohr (82) verbunden ist.

19. Rahmen nach Anspruch 18, **dadurch gekennzeichnet**, daß die Rohre (82; 84) in den Verbindungspunkten (92; 94; 96; 98) mit dem Lenkerrohr (16) und dem Sitzrohr (22) beweglich gelagert sind und das Sitzrohr (22) im Punkt (98) mit seinem oberen Teil (100) verschwenkbar ist.

20. Rahmen nach den vorhergehenden Ansprüchen, **dadurch gekennzeichnet**, daß im Punkt (94) eine eine Gasdruckfeder (104) aufweisende Verbindung angreift, deren anderes Ende am Rohr (84) befestigt ist.

21. Rahmen nach Anspruch 1, **dadurch gekennzeichnet**, daß zwischen dem Lenkerrohr (16) und dem Aufnahmepunkt (30) für das Hinterrad (32) ein hohlförmiges Flachteil (110), das in Streben (112) ausläuft, angeordnet ist und im Punkt (114) des Flachteiles (110) eine Sattelstütze (116) schwenkbar gelagert ist.

22. Rahmen nach Anspruch 21, **dadurch gekennzeichnet**, daß am unteren Ende der Sattelstütze (116) eine Gasdruckfeder (118) angreift, die innerhalb des Flachteiles (110) befestigt ist.

23. Rahmen nach Anspruch 1, **dadurch gekennzeichnet**, daß zwischen dem Lenkerrohr (16) und dem Aufnahmepunkt (30) für das Hinterrad (32) eine flache Scheibe (140) angeordnet ist, die einen Aufnahmepunkt (142) zur Lagerung einer Tretkurbel (144) aufweist, und parallel beabstandet zu der ersten Scheibe (140) eine zweite Scheibe (145) im Aufnahmepunkt (142) schwenkbar gelagert ist.

24. Rahmen nach Anspruch 23, **dadurch gekennzeichnet**, daß die zweite Scheibe (145) einen Sattel (146) trägt.

25. Rahmen nach den Ansprüchen 23 und 24, **dadurch gekennzeichnet**, daß die Scheiben (140; 145) korrespondierende Schlitze (148) aufweisen, in die ein einseitig einen Schnellverschluß (150) besitzender Bolzen (152) eingreift.

26. Rahmen nach Anspruch 1, **dadurch gekennzeichnet**, daß innerhalb des Lenkerrohres (16) eine Gasdruckfeder (120) angeordnet ist, die an ihrem oberen Ende den Lenker (122) trägt.

27. Rahmen nach Anspruch 1, **dadurch gekennzeichnet**, daß die Gabeln (126) der Vorderradgabel Gasdruckfedern (114) aufweisen.

28. Rahmen nach Anspruch 1, **dadurch gekennzeichnet**, daß der Lenkervorbau (128) am Lenkerrohr (132) mit einem Gelenk (130) schwenkbar gelagert ist.

29. Rahmen nach Anspruch 28, **dadurch gekennzeichnet**, daß das Gelenk (130) stufenlos einrastbar und arretierbar ist.
